# EUROPEAN PATENT APPLICATION

(11) **EP 4 761 183 A1**
(43) Date of publication of application: **17.06.2026**
(21) Application number: 25222286.4
(22) Date of filing: 10.12.2025
(51) Int. Cl.: H04L 9/40, H04L 9/32

(54) **ON DEMAND CLIENT AUTHENTICATION**

(30) Priority: 10.12.2024 US 202418976105
(71) Applicant: BeyondTrust Corporation, Johns Creek, GA 30097 (US)
(72) Inventor: PAYSON, Chris, Georgia 30097 (US); HILLMAN, Matthew, Georgia 30097 (US); MANKOWSKI, Sebastian, Georgia 30097 (US); DURHAM, Davy, Georgia 30097 (US)
(74) Representative: Reddie & Grose LLP

(57) **Abstract**

A secure client authentication system may generate short-term x509 end-entity certificates and short-term private keys based on client-specific parameters and an expiration time. An x509 Certificate Authority (CA) may issue the short-term x509 certificates upon receiving a client request to access a secure endpoint. Each issued certificate may include a Time-To-Live (TTL) value that defines a limited validity period, facilitating ephemeral access to the secure endpoint. Automatic expiration of these access credentials may restrict to the secure endpoint beyond the limited validity period, enhancing security by mitigating risks associated with long-term static credentials.

## Description

### TECHNICAL FIELD

This application generally relates to systems and methods for secure client authentication and more specifically to automatically issuing short-term private keys and short-term end-entity certificates.

### BACKGROUND

Digital security solutions rely on efficient and secure methods to authenticate users accessing protected resources. In various systems, client authentication protocols are increasingly implemented to verify a user's identity by means of cryptographic credentials, such as private keys and certificates. Traditionally, these credentials have been long-term and static, raising risks of exposure due to prolonged key validity.

In client authentication settings, x509 certificates serve as a widely accepted standard for establishing secure communications, relying on Certificate Authorities (CAs) to issue trusted certificates. While some implementations use pre-established x509 CA systems for issuing static certificates, existing solutions often lack mechanisms to dynamically generate short-term certificates for ephemeral use. Additionally, the operational complexity of maintaining and updating certificates manually or configuring long-lived CAs can impose significant administrative burdens, especially for organizations requiring stringent security practices, such as automated credential expiry and granular access control.

Consequently, there is a long-felt but unresolved need for improved systems and methods to address security concerns through automatically generated, time-limited certificates for client authentication, thereby reducing the risk of credential exposure while simplifying certificate management and lifecycle control.

This background information is provided to reveal information believed by the applicant to be of possible relevance. No admission is necessarily intended, nor should be construed, that any of the preceding information constitutes prior art.

### SUMMARY

Briefly described, and in various embodiments, the present disclosure generally relates to systems, methods, and apparatuses that provide secure client authentication through the automated issuance of short-term private keys and x509 end-entity certificates. According to some aspects, the disclosed system and methods may include various computing systems and devices designed to addresses technical challenges related to maintaining secure, time-limited access credentials without requiring long-term storage of private keys, which can pose risks of unauthorized access if exposed. An x509 Certificate Authority (CA), stored within a secure vault, may automatically generate short-term certificates for client authentication, thereby simplifying credential management and enhancing security.

According to some aspects, a vault may store an x509 CA associated with a private key and a public certificate. The CA may be either self-signed within the vault or uploaded from a trusted third-party source, providing flexibility for integration with different security infrastructures. When a client requests authentication, the request may be processed by identifying client-specific parameters and an expiration time. A Time-To-Live (TTL) may be calculated for the certificate based on the expiration time, providing the generated x509 end-entity certificate has a limited validity.

A short-term private key and corresponding short-term x509 end-entity certificate may be generated for temporary use. The short-term private key and corresponding short-term x509 end-entity certificate may minimize security risks by avoiding the need to store static, long-lived keys. A Certificate Signing Request (CSR) containing the client identification information may be dynamically generated and signed with the stored x509 CA. Moreover, cryptographic customization options may allow selection of key algorithms (e.g., RSA 2048, ECC secp384r1) and/or hash algorithms (e.g., SHA-256, SHA-384), which may be adjusted based on security needs and endpoint requirements.

Optionally, automatic credential injection may inject generated certificates are into client sessions without revealing the private key, further enhancing security during access. This approach may reduce manual credential handling, allowing administrators to restrict direct access to the CA while enabling authenticated users to access secure endpoints.

Additional optional features may include providing an indicator of an expiration of the CA to warn authorized users when renewal or rotation is necessary. Moreover, administrators may edit CA details, set expiration times, and/or track certificate lifecycle events through access logs. Macros may be supported within certificate subjects to dynamically insert user-specific data (e.g., username, email), further enhancing the relevance and security of generated credentials.

Accordingly, the disclosed systems and methods may provide a comprehensive solution to secure client authentication by automating the generation of ephemeral x509 certificates. Aspects of the disclosure may reduce administrative burdens, enhance credential security, and/or address the technical challenges of managing time-sensitive access across varying infrastructure needs.

The above and further features of the disclosed systems and methods will be recognized from the following detailed descriptions and drawings of various embodiments.

### BRIEF DESCRIPTION OF THE FIGURES

The accompanying drawings illustrate one or more embodiments and/or aspects of the disclosure and, together with the written description, serve to explain the principles of the disclosure. Wherever possible, the same reference numbers are used throughout the drawings to refer to the same or like elements of an embodiment, and wherein:
FIG. 1 illustrates a client authentication system according to various aspects of the present disclosure;
FIG. 2 illustrates an example environment for an authentication system according to various aspects of the present disclosure;
FIG. 3 illustrates an exemplary process for enabling secure client authentication according to various aspects of the present disclosure;
FIG. 4 illustrates an exemplary process for enabling secure client authentication according to various aspects of the present disclosure;
FIG. 5 illustrates an exemplary process for providing time-limited access to a secure endpoint according to various aspects of the present disclosure;
FIG. 6 illustrates an example schematic of a device according to various aspects of the present disclosure; and
FIG. 7 illustrates an example diagrammatic representation of a machine in the form of a computer system according to various aspects of the present disclosure.

### DETAILED DESCRIPTION

For the purpose of promoting an understanding of the principles of the present disclosure, reference will now be made to the embodiments illustrated in the drawings and specific language will be used to describe the same. It will, nevertheless, be understood that no limitation of the scope of the disclosure is thereby intended; any alterations and further modifications of the described or illustrated embodiments, and any further applications of the principles of the disclosure as illustrated therein are contemplated as would normally occur to one skilled in the art to which the disclosure relates. All limitations of scope should be determined in accordance with and as expressed in the claims.

Whether a term is capitalized is not considered definitive or limiting of the meaning of a term. As used in this document, a capitalized term shall have the same meaning as an uncapitalized term, unless the context of the usage specifically indicates that a more restrictive meaning for the capitalized term is intended. However, the capitalization or lack thereof within the remainder of this document is not intended to be necessarily limiting unless the context clearly indicates that such limitation is intended.

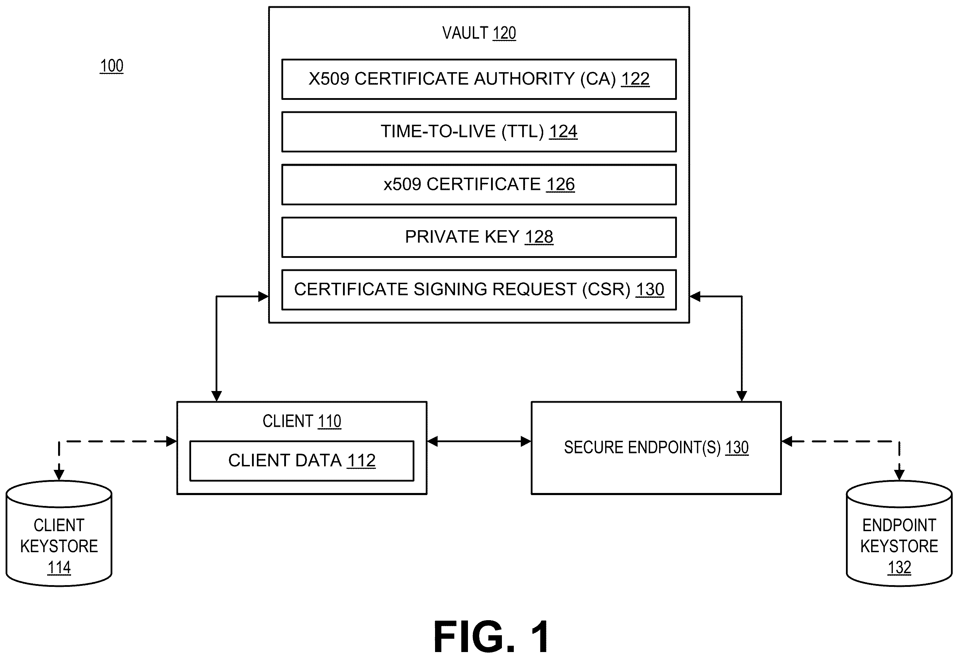

Referring now to the figures, for the purposes of example and explanation of the fundamental processes and components of the disclosed systems and processes, reference is made to FIG. 1, which illustrates an exemplary client authentication system 100. A client 110 may request secure authentication to access endpoint resources. Client 110 may encompass various entities and devices, such as a user's laptop accessing a secure camera for video monitoring, a mobile application connecting to an internal server for restricted data retrieval, an automated script requiring access to cloud resources for data processing, and/or a software application interfacing with an API to perform specific tasks within a secure environment. Additionally, client 110 may include IoT devices, such as sensors or industrial controllers, that need secure access to centralized management systems for configuration updates or data exchange.

Client 110 may be characterized by client data 112, including identifying information, such as unique identifiers or roles, necessary for verifying access rights. The client 110 may transmit the client data 112 to the vault 120 to facilitate the creation of a secure session. According to some aspects, client data 112 may include identifying information such as the client's username, device ID, IP address, session token, and/or user role, one or more of which may be used to validate access permissions and customize the authentication process. Additional examples of client data 112 may include application-specific attributes, such as API keys, cryptographic fingerprints, and/or metadata related to the client's session context, which may aid in generating unique and time-bound x509 certificates.

The vault 120 may include a secure repository for the x509 Certificate Authority (CA) 122 used in generating and signing short-term x509 end-entity certificates (e.g., x509 certificate 126). Moreover, vault 120 may encompass a secure digital repository that stores sensitive credentials, such as private keys (e.g., private key 128), x509 certificates (e.g., x509 certificate 126), encryption keys, and/or other authentication-related data, ensuring these assets are protected and accessible only by authorized processes. Examples of vault 120 may include enterprise-grade secure storage systems, such as hardware security modules (HSMs), dedicated key management systems, and/or cloud-based credential vaults that support automated, policy-driven issuance of time-limited certificates for secure client authentication.

Vault 120 may determine a Time-To-Live (TTL) 124 for each certificate issued, establishing a clear expiration time for the credential's validity and introducing a flexible control mechanism to adapt the certificate lifespan to specific security and operational requirements. The TTL 124 may be dynamically calculated based on request parameters received from the client 110, such as the duration for which access is needed or security policies governing session length. This customization allows the client authentication system 100 to generate certificates that align precisely with the client's intended use, minimizing unnecessary exposure. For example, a request from a temporary session may receive a shorter TTL 124, while a more extensive, secure operation may receive a slightly extended, but still finite, TTL 124.

Moreover, by limiting the certificate and private key validity to a defined TTL 124, vault 120 may mitigate potential security risks associated with long-lived credentials. This time-bound approach may ensure that, even if a certificate or private key were to be compromised, the window of exposure would be short, significantly reducing the risk of unauthorized, prolonged access to secure endpoints 130. Once the TTL expires, vault 120 may automatically invalidate or revoke the x509 certificate 126 and private key 128, making them unusable for subsequent authentication attempts. This automated expiration may strengthen the security framework by enforcing timely key rotation and/or reduce the administrative overhead involved in manually managing certificate lifespans. In this way, TTL 124 may reinforce security by minimizing both the duration and impact of potential credential compromises within the client authentication system 100.

Upon receiving a certificate request from the client 110, the vault 120 may generate a Certificate Signing Request (CSR) that includes the one or more unique attributes associated with the client 110, such as username, device ID, and/or application-specific information, and bind the unique attributes to the CSR. The vault 120 may use the x509 CA 122 and the private key 128 to digitally sign the CSR, establishing a chain of trust within the issued x509 certificate 126. The signing process may securely authenticate the x509 certificate 126 for recognition by the secure endpoint(s) 130.

According to some aspects, the vault 120 may use one or more cryptographic algorithms (e.g., RSA or ECC) and/or hash functions (e.g., SHA-256), based on security policies or client-specific requirements, to enhance security strength of the x509 certificate 126. For example, vault 120 may use RSA (Rivest-Shamir-Adleman) or ECC (Elliptic Curve Cryptography) to enhance security associated with the x509 certificate 126. RSA may provide strong security assurances in scenarios where backward compatibility with legacy systems is crucial. ECC, which offers equivalent security strength to RSA with smaller key sizes, may be selected for applications requiring lower computational overhead and faster processing speeds. By allowing these algorithmic choices, vault 120 may customize the x509 certificate 126 to meet both the security and performance needs of various clients and use cases. Moreover, algorithm selection may be driven by overarching security policies within the organization or may be tailored specifically to requests from the client 110, providing flexibility and adaptability in environments with diverse security requirements.

Furthermore, vault 120 may apply one or more hash functions, such as SHA-256 (Secure Hash Algorithm 256-bit), to enhance the security of the x509 certificate 126. The hash functions may generate a fixed-size hash value from the certificate data, ensuring that any alteration to the x509 certificate 126 can be detected. SHA-256 may provide a high level of security by producing a unique hash value that is computationally infeasible to reverse or replicate without the original data. Other hash functions, such as SHA-384 or SHA-512, may be selected if heightened security is required, allowing vault 120 to adapt the integrity features of the x509 certificate 126 to meet different levels of data sensitivity and regulatory standards. By offering configurable cryptographic and hash options, vault 120 may enhance the overall security strength of the x509 certificate 126, making it suitable for a broad range of applications, from low-security access scenarios to highly sensitive environments requiring stringent protection against unauthorized access and data tampering.

Once the CSR is signed, vault 120 may complete the creation of x509 certificate 126 by embedding the TTL 124, which may define an expiration timeframe of the x509 certificate 126. The TTL 124 may ensure that the x509 certificate 126 is valid only for a specified duration, aligning with the intended session length or access needs of the client 110. Upon completion, vault 120 may securely transmit the short-term x509 certificate 126 and the corresponding private key 128 to client 110, storing the certificate details for monitoring and auditing purposes. The generated x509 certificate 126 may include critical components such as identification data (e.g., client data 112), a public key, issuing CA information, and expiration date. This process may streamline certificate issuance, enhancing security by reducing manual interventions, and providing a seamless mechanism for generating, distributing, and monitoring x509 certificates within a secure, controlled environment.

Secure endpoint(s) 130 may include one or more target systems or services requiring authenticated access. Each endpoint may verify the x509 certificate 126 during the connection process to confirm the identity and granted permissions associated with the client 110. Secure endpoint(s) 130 may use an endpoint keystore 132 to store or retrieve the x509 certificate 126 issued to the client, allowing the secure endpoint(s) 130 to authenticate and establish a secure session. The endpoint keystore 132 may prevent unauthorized long-term access, ensuring that only valid, time-bound certificates are recognized. When a client connects, endpoint keystore 132 may reference the TTL 124 and other embedded parameters within the x509 certificate 126 to confirm the client's access privileges, ensuring compliance with the established security policies.

Moreover, client keystore 114 may securely store the generated short-term private key 128 and x509 certificate 126 received from vault 120. Moreover, client keystore 114 may prevent unauthorized access to sensitive credentials and ensure that private keys are not exposed during or after the authentication session, contributing to enhanced security.

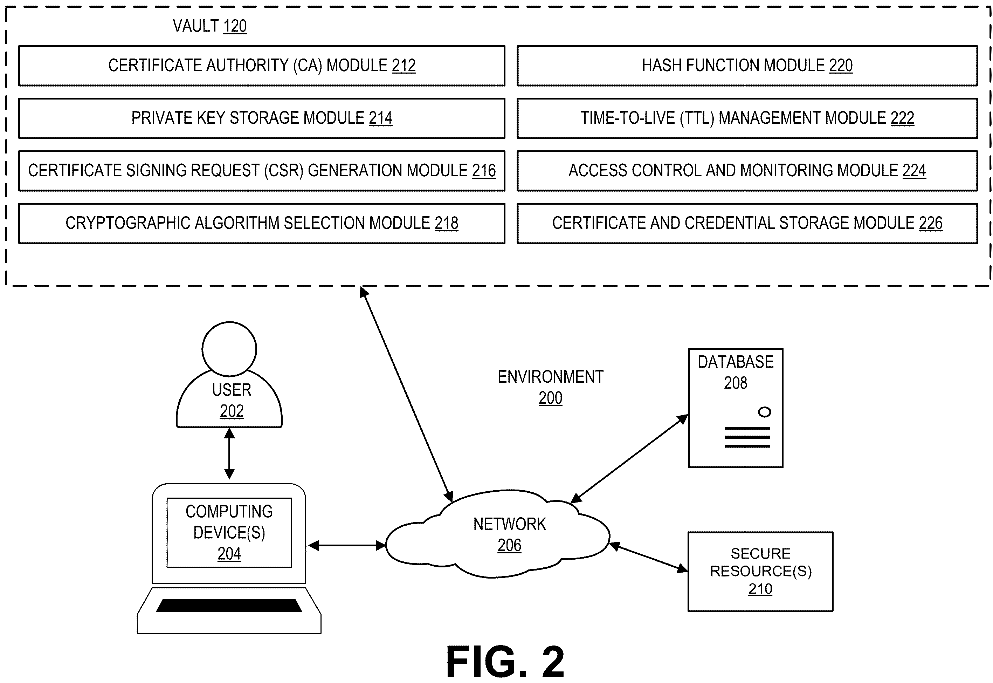

FIG. 2 illustrates an exemplary networked authentication environment 200 for secure client authentication using short-term x509 certificates to provide secure access to sensitive resources through dynamically generated cryptographic credentials. The authentication environment 200 may include one or more of a user 202, computing device(s) 204, network 206, database 208, secure resource(s) 210, and/or vault 120. Vault 120 may include one or more authentication modules to streamline and secure the authentication process through short-term certificate issuance. For example, vault 120 may include one more of a CA Module 212, a Private Key Storage Module 214, a CSR Generation Module 216, a Cryptographic Algorithm Selection Module 218, a Hash Function Module 220, a TTL Management Module 222, an Access Control and Monitoring Module 224, and/or a Certificate and Credential Storage Module 226.

The user 202 may initiate access to the secure resource(s) 210 by engaging with computing device(s) 204, which may include one or more of desktops, laptops, mobile devices, etc. These computing device(s) 204 may be connected over the network 206 and may serve as an interface through which the user 202 interacts with the authentication environment 200. Moreover, the computing device(s) 204 may employ one or more secure communication protocols to ensure encrypted data transfer between the user 202 and the authentication environment 200. Network 206, which can include a public and/or private network, may support secure channels such as VPNs or TLS, safeguarding data transmission and enabling a robust pathway for authentication requests.

The authentication environment 200 may include a database 208. The database 208 may securely store information relevant to user credentials, access logs, and/or permissions associated with secure resource(s) 210. Database 208 may support retrieval and verification of stored client data utilized by one or more of the authentication modules within the vault 120. Secure resource(s) 210 may include one or more endpoint assets that the user 202 seeks to access. These resources, whether servers, applications, or IoT devices, may require rigorous authentication to prevent unauthorized access. By relying on dynamically generated certificates, secure resource(s) 210 may ensure that each access attempt is validated through a time-limited credential, enhancing the security posture against prolonged credential exposure.

The CA Module 212 may manage the x509 Certificate Authority, which may serve as the trusted entity for signing and issuing x509 certificates within the vault 120. This CA Module 212 may utilize either a self-signed CA, created and validated internally within the system, or a CA obtained from a trusted third-party provider, depending on the security requirements and infrastructure of the organization. The CA Module 212 may ensure that each x509 certificate issued is associated with a recognized authority, thereby establishing a chain of trust necessary for secure client authentication. Moreover, the CA Module 212 may manage certificate lifecycle tasks such as issuing, renewing, and revoking x509 certificates as necessary. By actively monitoring the status of issued certificates and checking expiration dates or security compliance requirements, the CA Module 212 may ensure that certificates align with evolving organizational policies and security standards. According to some aspects, the CA Module 212 may support automated certificate issuance workflows, enabling it to efficiently handle high-volume authentication requests without compromising security.

The Private Key Storage Module 214 may provide secure storage and protection of the private key associated with the CA. For example, the Private Key Storage Module 214 may keep the private key isolated and accessible only by authorized processes within the vault 120, thereby reducing risk of key compromise. Access to the private key may be restricted through encryption and hardware-based security measures, such as hardware security modules (HSMs) or dedicated key management systems, which may further secure the storage environment and enforce stringent access controls. According to some aspects, the Private Key Storage Module 214 may monitor and log any access attempts to the stored private key, supporting auditability and compliance with security policies. The Private Key Storage Module 214 may further include automated key rotation and renewal processes to periodically update the private key in line with best practices for key management. By employing these secure storage and access controls, the Private Key Storage Module 214 may maintain the integrity of the CA's private key, ensuring it remains secure throughout its lifecycle.

The CSR Generation Module 216 may create CSRs that serve as a basis for generating unique x509 certificates. According to some aspects, the CSR Generation Module 216 may generate a CSR by binding specific client identification parameters, such as user ID or device attributes, to the certificate request, forming a unique and verifiable credential for each client authentication attempt. The CSR may encapsulate the client's identity within a standardized request format, enabling the CA Module 212 to issue a certificate that is uniquely associated with the client's request. Additionally, the CSR Generation Module 216 may validate and format client information to align with the x509 certificate standards. Moreover, the CSR Generation Module 216 may support one or more customization options for the CSRs, allowing clients to define specific attributes or security parameters within the certificate. By providing a structured approach to CSR creation, the CSR Generation Module 216 may streamline the certificate issuance process and ensure that each certificate is appropriately bound to the requesting client's identity.

The Cryptographic Algorithm Selection Module 218 may provide flexibility in choosing cryptographic algorithms for certificate creation, offering options such as RSA and ECC to meet diverse security needs. For example, RSA may offer strong security assurances and compatibility with legacy systems. ECC may provide equivalent security with smaller key sizes, making it suitable for applications requiring lower computational overhead. By allowing the selection of algorithm type, the Cryptographic Algorithm Selection Module 218 may support customization based on client-specific requirements or organizational security policies. In addition to enabling algorithm selection, the Cryptographic Algorithm Selection Module 218 may manage algorithm updates and ensure compliance with emerging cryptographic standards. For example, the Cryptographic Algorithm Selection Module 218 may also incorporate automated policy checks to verify that the selected algorithms meet organizational security standards, providing an added layer of assurance in certificate issuance. Through its flexible configuration, the Cryptographic Algorithm Selection Module 218 may enhance the adaptability and security strength of the generated certificates, ensuring alignment with the latest cryptographic best practices.

The Hash Function Module 220 may select and apply hash functions to ensure data integrity within generated x509 certificates. The Hash Function Module 220 may support various hash functions, including SHA-256, SHA-384, and SHA-512, enabling organizations to choose the level of security most appropriate for their needs. By applying a secure hash algorithm, the Hash Function Module 220 may generate a unique, fixed-size hash value for certificate data, making it resistant to unauthorized modifications or tampering. Moreover, the Hash Function Module 220 may enable adaptability in hashing standards, ensuring certificates comply with data integrity requirements and regulatory standards. For example, the Hash Function Module 220 may provide flexibility in handling various security demands across different applications, as higher levels of hashing (e.g., SHA-512) may be selected for sensitive environments requiring additional integrity protections. By facilitating secure and compliant hashing processes, the Hash Function Module 220 may strengthen the trustworthiness of the certificates generated within vault 120.

The TTL Management Module 222 may manage the lifecycle of each x509 certificate by calculating and embedding a TTL value to specify its validity period. By defining a finite lifespan for each certificate, the TTL Management Module 222 may mitigate risks associated with long-term credential exposure and reduce potential security vulnerabilities. For example, the TTL Management Module 222 may dynamically adjust the TTL based on client-specific requirements or security policies, providing tailored lifespans that align with the intended usage duration. According to some aspects, the TTL Management Module 222 may track the status of each certificate to prevent unauthorized use post-expiration. For example, the TTL Management Module 222 may may provide automated expiration notifications for clients and may trigger revocation processes if necessary. By enforcing a well-defined certificate lifecycle, the TTL Management Module 222 may ensure that authentication credentials remain valid only for a specified period, enhancing the overall security of the client authentication process.

The Access Control and Monitoring Module 224 may provide one or more security functions by managing access permissions for client requests and enforcing policies that allow only authorized entities to request or modify certificates. The Access Control and Monitoring Module 224 may operate with strict access control policies, verifying user credentials and enforcing role-based permissions to prevent unauthorized access to the certificate issuance capabilities of the vault. Access attempts may be logged and monitored to support compliance with auditing and regulatory requirements, creating a transparent and accountable authentication process. According to some aspects, the Access Control and Monitoring Module 224 may offer continuous monitoring capabilities that track certificate requests, issuance events, and/or access logs. The Access Control and Monitoring Module 224 thus enhances operational security by ensuring that access to certificate resources is strictly regulated and continuously observed, enabling administrators to audit client activity and detect any anomalous behavior that could indicate potential security threats.

The Certificate and Credential Storage Module 226 may store one or more of issued certificates, associated metadata, and/or access logs, supporting efficient management of credential lifecycle data. The Certificate and Credential Storage Module 226 may securely retain all issued short-term certificates and related information, enabling vault 120 to maintain accurate records for monitoring and compliance. The stored metadata may include information such as issuance timestamps, expiration dates, and client identifiers, providing a centralized repository for tracking credential details over time. Moreover, the Certificate and Credential Storage Module 226 may support lifecycle management functions, such as certificate renewal, revocation, and archival. By maintaining a comprehensive record of issued credentials, the Certificate and Credential Storage Module 226 may facilitate efficient certificate audits, enabling administrators to verify the legitimacy and history of each certificate as required. This secure, structured storage approach may ensure that credential data remains organized, accessible, and compliant with regulatory standards, reinforcing the overall integrity of the client authentication system.

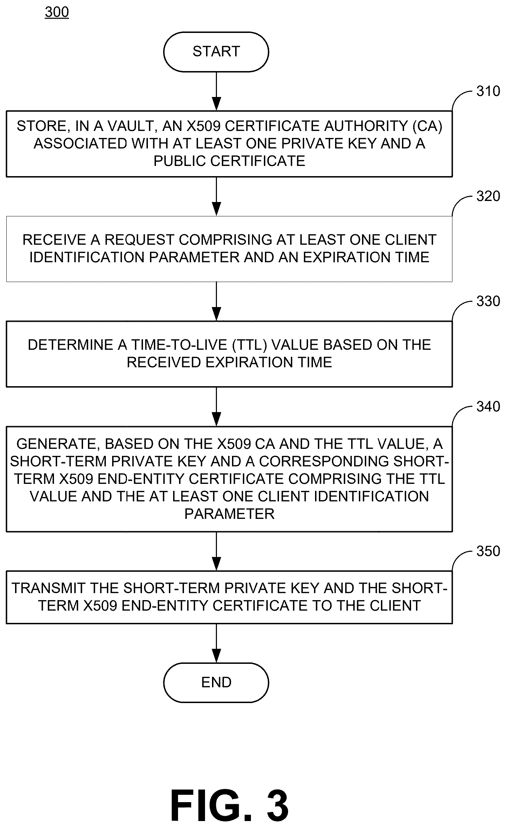

Referring now to FIG. 3, shown is a flowchart of an exemplary process 300 for enabling secure client authentication by automatically issuing short-term private keys and x509 end-entity certificates. Process 300, structured for adaptability and security, may include one or more steps that may be executed by components of the client authentication system 100 and/or by modules within the vault 120. Each step of process 300 may provide a layer of security and customization to fulfill varying client authentication needs in a way that minimizes exposure risks associated with long-term credentials.

At step 310, the process 300 may include storing, in a vault, an x509 CA associated with at least one private key and a public certificate. The CA may sign and/or issue x509 certificates that will authenticate client devices or users. Storing the CA within the vault may provide a secure environment, including protecting the CA's private key against unauthorized access using hardware security modules (HSMs) or dedicated key management systems. By storing the CA in a protected vault, the process 300 may establish a root of trust for all issued certificates such that the integrity of each issued certificate may be verified against a known and protected source.

Moreover, storing the CA within the vault may enable integration with other security policies and operational requirements, including automated certificate lifecycle management. For example, the vault may also store expiration indicators or audit logs associated with the CA, facilitating automated renewal and audit processes to ensure compliance with organizational policies or regulatory standards. This integration may allow organizations to securely store the CA while supporting flexibility in management practices.

At step 320, the process 300 may include receiving a request comprising at least one client identification parameter and an expiration time. Client identification parameters may include unique attributes, such as a user ID, device ID, session identifier, and/or additional application-specific data that can uniquely identify the client within the system. Each certificate request may be properly attributed to a known client based on the client identification parameters, enabling the vault to generate a credential bound to the specific identity of that client. The vault 120 may use the expiration time to customize a validity period of the certificate, allowing the process 300 to align a lifecycle of the certificate with the intended duration of use.

Moreover, the client identification parameter(s) and/or the expiration time may be used to tailor the certificate to a usage context of the client. For example, in a case where a client only requires access to a resource for a limited session, the expiration time in the request may be set to match this session duration. This approach contrasts with traditional static certificates by offering adaptability in managing credential lifespans, thus reducing the window of exposure. By ensuring that each client request includes specific identification and expiration details, the process 300 may support a granular level of access control that enables customized and ephemeral access tailored to the specific client and context of use.

At step 330, the process 300 may determine a TTL value for the certificate based on the expiration time received at step 320. The TTL may define the validity duration of the certificate, ensuring that it is automatically invalidated after a specified period. The TTL may be dynamically determined align with the expiration time (e.g., specified by the client), providing a flexible mechanism to adapt to varying security requirements and access needs. By embedding a defined TTL into each certificate, risks associated with long-lived credentials may be mitigated, such that each issued certificate may be time-bound and the potential impact of credential misuse may be minimized if a certificate is exposed.

According to some aspects, organizational security policies that require adaptable and manageable certificate lifespans may be supported by the dynamic TTL calculation supports. For example, a client accessing a restricted database for a one-time data retrieval may receive a certificate with a short TTL, while a client operating within a secure, ongoing environment may require a slightly extended, yet finite, TTL. The ability to dynamically calculate and embed TTL values based on specific client needs enhances the flexibility of the authentication process, allowing organizations to manage risks associated with prolonged credential exposure in line with their overall security strategies.

At step 340, the process 300 may include generating, based on the x509 CA and the TTL value, a short-term private key and a corresponding short-term x509 end-entity certificate comprising the TTL value and the at least one client identification parameter. This generated cryptographic materials (e.g., the short-term private key and the corresponding short-term x509 end-entity certificate) may be used to authenticate the client, binding the client identification parameters and the TTL within the certificate. The private key may be generated uniquely for a session, ensuring that each client receives a separate, non-reusable key. The certificate may be created with the TTL value, establishing a time-limited validity aligned with access needs of the client. The certificate may include additional customizations based on security policies or client-specific requirements, such as choosing cryptographic algorithms (e.g., RSA for compatibility or ECC for performance efficiency) and applying appropriate hash functions (e.g., SHA-256) to secure data integrity.

The fine-grained control over cryptographic properties provided by process 300 may ensure that the certificate meets security standards and aligns with performance and compatibility requirements of the client. For example, a mobile device accessing sensitive information may benefit from ECC due to its reduced computational overhead, while a legacy system may require RSA to maintain compatibility with older security infrastructures. By creating a unique private key and certificate for each session, step 340 may reduce risks related to static, long-lived credentials, ensuring that each authentication attempt relies on a new, temporary set of cryptographic credentials.

At step 350, the process 300 may include transmitting the short-term private key and the short-term x509 end-entity certificate to the client, wherein the short-term x509 end-entity certificate is associated with authenticating the client to a secure endpoint for a duration associated with the TTL value. The transmission may be conducted using secure channels, ensuring that the cryptographic materials are protected against interception or unauthorized access during delivery. The client may then use the short-term certificate and private key to authenticate to a secure endpoint for a period defined by the TTL, providing a controlled and time-bound access. By adhering to secure transmission protocols and embedding expiration parameters, the process 300 may ensure that even if the certificate or private key is compromised, the limited TTL curtails the duration of potential misuse.

According to some aspects, process 300 may enable clients to interact with protected resources without risking prolonged exposure or misuse of credentials. For example, a user accessing a restricted API for a limited analysis task can receive a certificate that grants access only for the duration necessary to complete the task. Once the TTL expires, the certificate may be invalidated, preventing unauthorized reuse. This approach may exemplify the utility of the process 300 in environments requiring secure, temporary access to sensitive resources, aligning with broader organizational policies on credential management and lifecycle control. By providing a streamlined, secure mechanism for issuing, delivering, and managing short-term certificates, the process 300 may enhance the security and flexibility of client authentication across various contexts.

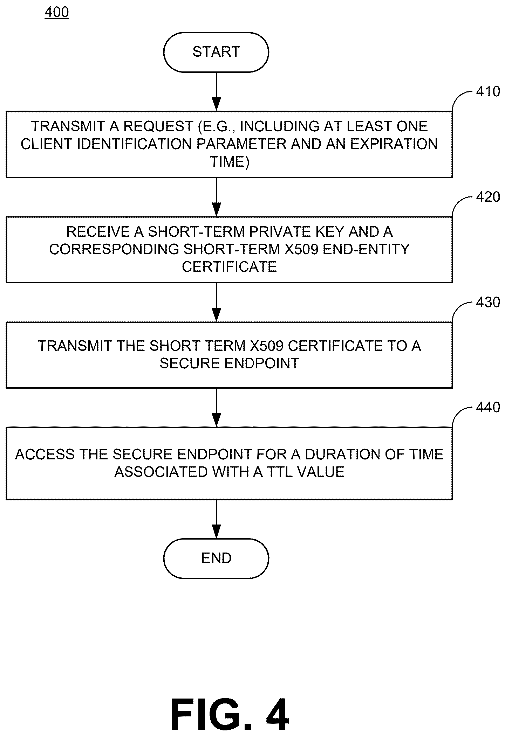

Referring now to FIG. 4, shown is a flowchart of an exemplary process 400 for secure client authentication using short-term private keys and x509 end-entity certificates. Process 400, structured for adaptability and security, may include one or more steps that may be executed by components of the client authentication system 100, client 110, and/or by modules within the vault 120. Each step of process 400 may provide a layer of security and customization to fulfill varying client authentication needs in a way that minimizes exposure risks associated with long-term credentials.

At step 410, the process 400 may include transmitting a request (e.g., to a vault and/or a secure endpoint) comprising at least one client identification parameter and an expiration time. For example, the client may initiate a request by transmitting a client identification parameter and a specified expiration time. The request may be received by a component within the client authentication system, such as the Vault, which securely manages CA functions and client credentials. The client identification parameter may provide a unique identifier for the client entity, allowing the system to authenticate and personalize the issued certificate. Examples of client identification parameters may include user identifiers, device IDs, or session-specific tokens. The expiration time parameter may be used to set a controlled lifespan for the generated certificate, establishing a basis for a subsequent TTL calculation, which enables dynamic adaptation to client-specific security needs.

For example, if a client requires access to a secure endpoint for a defined, limited session, the expiration time may be set to one hour, indicating that the issued certificate should be valid only for this duration. By embedding an expiration time at the outset, step 410 lays the groundwork for creating secure, time-sensitive authentication credentials. Process 400 may mitigate potential risks associated with prolonged credential exposure by ensuring each certificate is explicitly tailored to the client's intended usage period.

At step 420, the process 400 may receive a short-term private key and a corresponding short-term x509 end-entity certificate, generated based on the client's identification parameter and the requested expiration time. The short-term key-certificate pair may be derived from an x509 CA stored in the Vault, with the short-term private key generated dynamically for each session. This arrangement may prevent reuse of static credentials, as each authentication session may be backed by unique cryptographic material, reinforcing the security of client interactions with secure endpoints. The short-term x509 end-entity certificate may include both the client-specific identification and the computed TTL, ensuring a granular level of control over the validity period and binding the certificate specifically to the client.

For example, a client needing brief access to a confidential database may receive a certificate valid for only the duration necessary to complete the task. After this period, the certificate may be rendered invalid, reducing the risk of unauthorized reuse. This controlled, time-limited issuance may provide adaptability and security benefits, allowing tailored access while protecting sensitive resources.

At step 430, the process 400 may include transmitting the short-term x509 certificate to a secure endpoint. Moreover, the process 400 may securely pass the certificate to the endpoint, with the certificate embedded with the TTL value to restrict its validity window. The limited lifespan of the short-term x509 certificate may allow the endpoint to authenticate the client only for the duration defined by the TTL, thus limiting the potential for misuse if the short-term x509 certificate or short-term private key were compromised. The endpoint, upon receiving the short-term x509 certificate, may verify its authenticity based on the embedded TTL and other security attributes, ensuring compliance with the defined authentication policies.

For example, if the client is accessing a secure API, the secure endpoint may rely on the short-term x509 certificate to validate the client's identity and permissions. The TTL parameter embedded within the short-term x509 certificate may alert the secure endpoint to revoke access automatically once the validity period lapses. This structured handoff of credentials may ensure that access is not only authenticated but also tightly controlled to prevent overextension of privileges.

At step 440, the process 400 may include accessing, for a duration of time associated with the TTL value, the secure endpoint. For example, the client may access the secure endpoint for a period defined by the TTL value. The access may be authorized only for a specified window, aligning with organizational security policies that restrict the duration of certificate validity. Process 400 may provide robust control over client access, ensuring that each session is authenticated, tracked, and ultimately constrained by the predefined lifespan of the issued certificate. Once the TTL expires, the secure endpoint may no longer recognize the short-term x509 certificate, effectively terminating access without manual intervention, reducing administrative burden and enhancing security.

For example, if the short-term x509 certificate associated with a client is valid for one hour, the secure endpoint may grant the client access only within this period. Any attempts (e.g., by the client) to reconnect post-expiration may be denied unless a new authentication request is made. This time-bound access mechanism may provide a structured security layer, allowing organizations to enforce secure, temporary access for clients interacting with sensitive resources, thereby meeting both security and operational requirements.

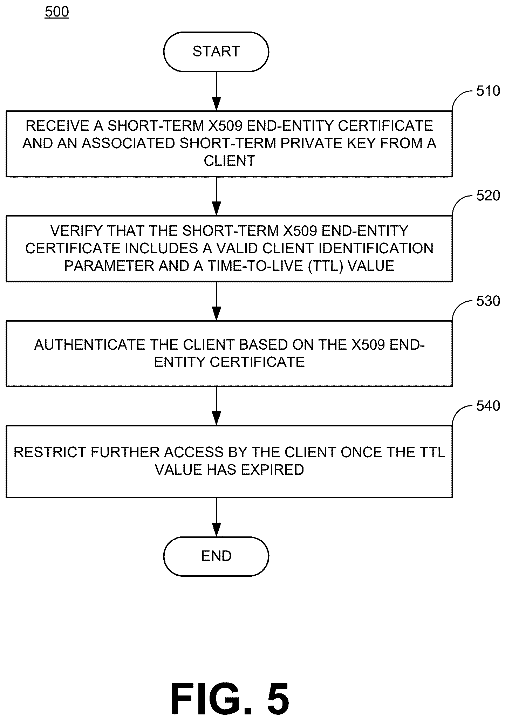

Referring now to FIG. 5, shown is a flowchart of an exemplary process 500 for providing time-limited access to a secure endpoint by enforcing automatic expiration of the client's credentials. Process 500 may manage client access, providing secure, temporary authentication to protected resources by leveraging time-bound x509 certificates and automated expiration controls.

At step 510, the process 500 may receive (e.g., by a secure endpoint from a client) a short-term x509 end-entity certificate and an associated short-term private key. These cryptographic credentials may be generated dynamically, based on an x509 CA stored securely in a vault. The vault may manage the CA as a trusted source for issuing client certificates. The CA may incorporate a TTL value into the short-term x509 end-entity certificate. The TTL value may define a validity duration for the short-term x509 end-entity certificate. For example, when a client requests authentication, a certificate may be generated with a TTL of a specific time (e.g., 30 minutes), making the certificate valid only for the pre-set duration. By providing a finite credential lifespan, risks associated with prolonged credential exposure may be reduced. In some aspects, a certificate may be requested by a client application needing limited access to sensitive data, allowing the vault to enforce a strict time-limited authentication framework.

At step 520, process 500 may verify that the received x509 end-entity certificate includes a valid client identification parameter and the TTL value, which together may define a scope and a period of validity of the x509 end-entity certificate. This verification may ensure that the certificate corresponds to the specific client and adheres to the established validity period, as indicated by the TTL. For example, the certificate may include a client identifier, such as a username or device ID, paired with the TTL to restrict usage strictly within a designated timeframe. Verifying these attributes may serve as a safeguard, ensuring that each issued certificate aligns with the intended client request and enforces the defined validity constraints. If a certificate fails verification, the process 500 may reject the access request from the client, preventing unauthorized or misconfigured access attempts.

At step 530, the process 500 may authenticate the client based on the short-term x509 end-entity certificate. This authentication may ensure that access to the secure endpoint is valid only for the duration associated with the TTL value. During this step, the secure endpoint may verify the integrity and expiry time of the short-term x509 end-entity certificate, allowing access if the short-term x509 end-entity certificate remains within its TTL period. For example, in a secure data retrieval scenario, a client may present the short-term x509 end-entity certificate to gain temporary access to an endpoint hosting confidential data. The endpoint, recognizing the TTL embedded in the short-term x509 end-entity certificate, may grant access but revoke access automatically when the TTL expires. Thus, process 500 may secure the endpoint against long-term, unauthorized usage, emphasizing a short-term, dynamic authentication approach tailored to specific security requirements.

At step 540, the process 500 may restrict further client access to the secure endpoint once the TTL value has expired. Upon TTL expiration, the certificate is no longer valid, and any subsequent attempts to use it for authentication may be denied, thus enforcing a strict access limitation. This automatic expiration mechanism may provide an additional security layer, ensuring that each client session is time-bound and that expired certificates cannot be exploited for unauthorized access. For example, if a certificate with a 30-minute TTL is issued for an API request, access may terminate precisely at the end of this period, requiring a new certificate for continued access. Process 500 may enable the secure endpoint to maintain control over resource access, aligning with rigorous security protocols that mandate temporary access and prevent certificate reuse beyond the specified validity period.

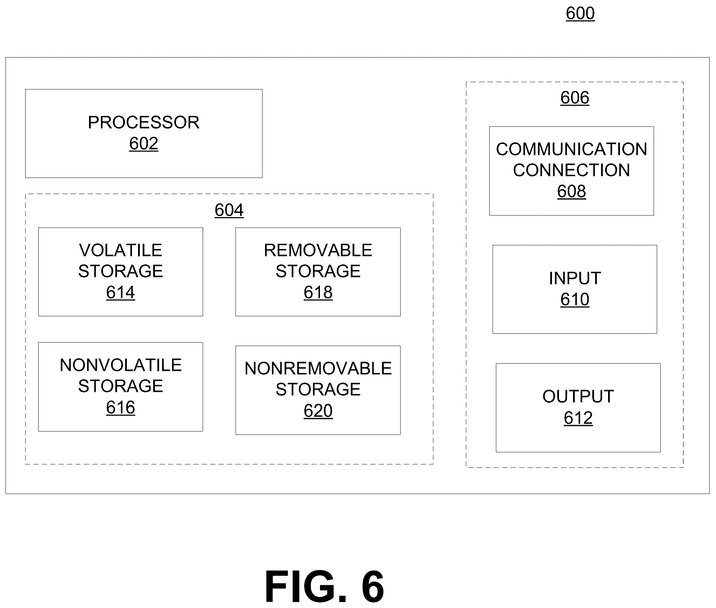

FIG. 6 is a block diagram of a computing device 600 that may be connected to or comprise a component of the client authentication system 100 and/or authentication environment 200. Computing device 600 may comprise hardware or a combination of hardware and software. The functionality to provide secure client authentication may reside in one or a combination of computing devices 600. Computing device 600 depicted in FIG. 6 may represent or perform functionality of an appropriate computing device 600, or a combination of computing devices 600, such as, for example, a component or various components of a client authentication system, a computing device, a processor, a server, a gateway, a database, a firewall, a router, a switch, a modem, an encryption tool, a virtual private network (VPN), a network access control (NAC) device, a secure web gateway, or the like, or any appropriate combination thereof. It is emphasized that the block diagram depicted in FIG. 6 is exemplary and not intended to imply a limitation to a specific example or configuration. Thus, computing device 600 may be implemented in a single device or multiple devices (e.g., single server or multiple servers, single gateway or multiple gateways, single controller or multiple controllers). Multiple network entities may be distributed or centrally located. Multiple network entities may communicate wirelessly, via hard wire, or any appropriate combination thereof.

Computing device 600 may comprise a processor 602 and a memory 604 coupled to processor 602. Memory 604 may contain executable instructions that, when executed by processor 602, cause processor 602 to effectuate operations associated with secure client authentication. As evident from the description herein, computing device 600 is not to be construed as software per se.

In addition to processor 602 and memory 604, computing device 600 may include an input/output system 606. Processor 602, memory 604, and input/output system 606 may be coupled together (coupling not shown in FIG. 6) to allow communications between them. Each portion of computing device 600 may comprise circuitry for performing functions associated with each respective portion. Thus, each portion may comprise hardware, or a combination of hardware and software. Accordingly, each portion of computing device 600 is not to be construed as software per se. Input/output system 606 may be capable of receiving or providing information from or to a communications device or other network entities configured for client authentication. For example, input/output system 606 may include a wireless communication (e.g., 3G/4G/5G/GPS) card. Input/output system 606 may be capable of receiving or sending video information, audio information, control information, image information, data, or any combination thereof. Input/output system 606 may be capable of transferring information with computing device 600. In various configurations, input/output system 606 may receive or provide information via any appropriate means, such as, for example, optical means (e.g., infrared), electromagnetic means (e.g., RF, Wi-Fi, Bluetooth^{®}, ZigBee^{®}), acoustic means (e.g., speaker, microphone, ultrasonic receiver, ultrasonic transmitter), or a combination thereof. In an example configuration, input/output system 606 may comprise a Wi-Fi finder, a two-way GPS chipset or equivalent, or the like, or a combination thereof.

Input/output system 606 of computing device 600 also may contain a communication connection 608 that allows computing device 600 to communicate with other devices, network entities, or the like. Communication connection 608 may comprise communication media. Communication media may embody computer-readable instructions, data structures, program modules or other data in a modulated data signal such as a carrier wave or other transport mechanism and includes any information delivery media. By way of example, and not limitation, communication media may include wired media such as a wired network or direct-wired connection, or wireless media such as acoustic, RF, infrared, or other wireless media. The term computer-readable media as used herein includes both storage media and communication media. Input/output system 606 also may include an input device 610 such as keyboard, mouse, pen, voice input device, or touch input device. Input/output system 606 may also include an output device 612, such as a display, speakers, or a printer.

Processor 602 may be capable of performing functions associated with client authentication, such as functions for a client authentication system, as described herein. For example, processor 602 may be capable of, in conjunction with any other portion of computing device 600, providing secure client authentication through the automated issuance of short-term private keys and x509 end-entity certificates, as described herein.

Memory 604 of computing device 600 may comprise a storage medium having a concrete, tangible, physical structure. As is known, a signal does not have a concrete, tangible, physical structure. Memory 604, as well as any computer-readable storage medium described herein, is not to be construed as a signal. Memory 604, as well as any computer-readable storage medium described herein, is not to be construed as a transient signal. Memory 604, as well as any computer-readable storage medium described herein, is not to be construed as a propagating signal. Memory 604, as well as any computer-readable storage medium described herein, is to be construed as an article of manufacture.

Memory 604 may store any information utilized in conjunction with an authentication system. Depending upon the exact configuration or type of processor, memory 604 may include a volatile storage 614 (such as some types of RAM), a nonvolatile storage 616 (such as ROM, flash memory), or a combination thereof. Memory 604 may include additional storage (e.g., a removable storage 618 or a non-removable storage 620) including, for example, tape, flash memory, smart cards, CD-ROM, DVD, or other optical storage, magnetic cassettes, magnetic tape, magnetic disk storage or other magnetic storage devices, USB-compatible memory, or any other medium that can be used to store information and that can be accessed by computing device 600. Memory 604 may comprise executable instructions that, when executed by processor 602, cause processor 602 to effectuate operations associated with client authentication.

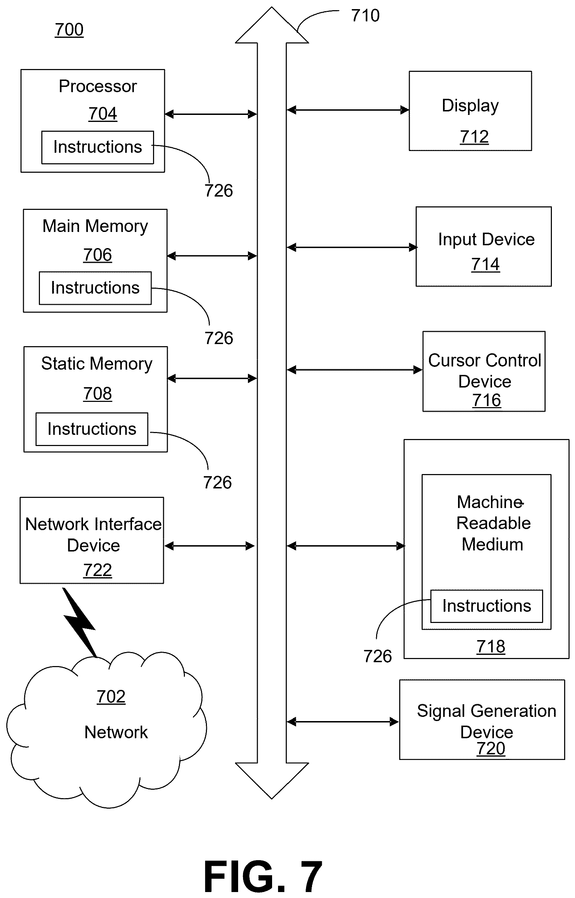

FIG. 7 depicts an exemplary diagrammatic representation of a machine in the form of a computer system 700 within which a set of instructions, when executed, may cause the machine to perform any one or more of the methods described above. One or more instances of the machine can operate, for example, as processor 602, client authentication system 100, client, 110, client keystore 114, vault 120, secure endpoint(s) 130, endpoint keystore 132, computing device(s) 204, database 208, secure resource(s) 210, and other devices of FIGS. 1-6. In some examples, the machine may be connected (e.g., using a network 702) to other machines. In a networked deployment, the machine may operate in the capacity of a server or a client user machine in a server-client user network environment, or as a peer machine in a peer-to-peer (or distributed) network environment.

The machine may comprise a server computer, a client user computer, a personal computer (PC), a tablet, a smart phone, a laptop computer, a desktop computer, a control system, a network router, switch or bridge, or any machine capable of executing a set of instructions (sequential or otherwise) that specify actions to be taken by that machine. It will be understood that a communication device of the subject disclosure includes broadly any electronic device that provides voice, video or data communication. Further, while a single machine is illustrated, the term "machine" shall also be taken to include any collection of machines that individually or jointly execute a set (or multiple sets) of instructions to perform any one or more of the methods discussed herein.

Computer system 700 may include a processor (or controller) 704 (e.g., a central processing unit (CPU)), a graphics processing unit (GPU, or both), a main memory 706 and a static memory 708, which communicate with each other via a bus 710. The computer system 700 may further include a display unit 712 (e.g., a liquid crystal display (LCD), a flat panel, or a solid-state display). Computer system 700 may include an input device 714 (e.g., a keyboard), a cursor control device 716 (e.g., a mouse), a disk drive unit 718, a signal generation device 720 (e.g., a speaker or remote control) and a network interface device 722. In distributed environments, the examples described in the subject disclosure can be adapted to utilize multiple display units 712 controlled by two or more computer systems 700. In this configuration, presentations described by the subject disclosure may in part be shown in a first of display units 712, while the remaining portion is presented in a second of display units 712.

The disk drive unit 718 may include a tangible computer-readable storage medium on which is stored one or more sets of instructions (e.g., instructions 726) embodying any one or more of the methods or functions described herein, including those methods illustrated above. Instructions 726 may also reside, completely or at least partially, within main memory 706, static memory 708, or within processor 704 during execution thereof by the computer system 700. Main memory 706 and processor 704 also may constitute tangible computer-readable storage media.

From the foregoing, it will be understood that various aspects of the processes described herein are software processes that execute on computer systems that form parts of the system. Accordingly, it will be understood that various embodiments of the system described herein are generally implemented as specially-configured computers including various computer hardware components and, in many cases, significant additional features as compared to conventional or known computers, processes, or the like, as discussed in greater detail herein. Embodiments within the scope of the present disclosure also include computer-readable media for carrying or having computer-executable instructions or data structures stored thereon. Such computer-readable media can be any available media which can be accessed by a computer, or downloadable through communication networks. By way of example, and not limitation, such computer-readable media can comprise various forms of data storage devices or media such as RAM, ROM, flash memory, EEPROM, CD-ROM, DVD, or other optical disk storage, magnetic disk storage, solid state drives (SSDs) or other data storage devices, any type of removable nonvolatile memories such as secure digital (SD), flash memory, memory stick, etc., or any other medium which can be used to carry or store computer program code in the form of computer-executable instructions or data structures and which can be accessed by a general purpose computer, special purpose computer, specially-configured computer, mobile device, etc.

When information is transferred or provided over a network or another communications connection (either hardwired, wireless, or a combination of hardwired or wireless) to a computer, the computer properly views the connection as a computer-readable medium. Thus, any such connection is properly termed and considered a computer-readable medium. Combinations of the above should also be included within the scope of computer-readable media. Computer-executable instructions comprise, for example, instructions and data which cause a general-purpose computer, special purpose computer, or special purpose processing device such as a mobile device processor to perform one specific function or a group of functions.

Those skilled in the art will understand the features and aspects of a suitable computing environment in which aspects of the disclosure may be implemented. Although not required, some of the embodiments of the claimed systems may be described in the context of computer-executable instructions, such as program modules or engines, as described earlier, being executed by computers in networked environments. Such program modules are often reflected and illustrated by flow charts, sequence diagrams, exemplary screen displays, and other techniques used by those skilled in the art to communicate how to make and use such computer program modules. Generally, program modules include routines, programs, functions, objects, components, data structures, application programming interface (API) calls to other computers whether local or remote, etc. that perform particular tasks or implement particular defined data types, within the computer. Computer-executable instructions, associated data structures and/or schemas, and program modules represent examples of the program code for executing steps of the methods disclosed herein. The particular sequence of such executable instructions or associated data structures represents examples of corresponding acts for implementing the functions described in such steps.

Those skilled in the art will also appreciate that the claimed and/or described systems and methods may be practiced in network computing environments with many types of computer system configurations, including personal computers, smartphones, tablets, hand-held devices, multi-processor systems, microprocessor-based or programmable consumer electronics, networked PCs, minicomputers, mainframe computers, and the like. Embodiments of the claimed system are practiced in distributed computing environments where tasks are performed by local and remote processing devices that are linked (either by hardwired links, wireless links, or by a combination of hardwired or wireless links) through a communications network. In a distributed computing environment, program modules may be located in both local and remote memory storage devices.

An exemplary system for implementing various aspects of the described operations, which is not illustrated, includes a computing device including a processing unit, a system memory, and a system bus that couples various system components including the system memory to the processing unit. The computer will typically include one or more data storage devices for reading data from and writing data to. The data storage devices provide nonvolatile storage of computer-executable instructions, data structures, program modules, and other data for the computer.

Computer program code that implements the functionality described herein typically comprises one or more program modules that may be stored on a data storage device. This program code, as is known to those skilled in the art, usually includes an operating system, one or more application programs, other program modules, and program data. A user may enter commands and information into the computer through keyboard, touch screen, pointing device, a script containing computer program code written in a scripting language or other input devices (not shown), such as a microphone, etc. These and other input devices are often connected to the processing unit through known electrical, optical, or wireless connections.

The computer that effects many aspects of the described processes will typically operate in a networked environment using logical connections to one or more remote computers or data sources, which are described further below. Remote computers may be another personal computer, a server, a router, a network PC, a peer device or other common network node, and typically include many or all of the elements described above relative to the main computer system in which the systems are embodied. The logical connections between computers include a local area network (LAN), a wide area network (WAN), virtual networks (WAN or LAN), and wireless LANs (WLAN) that are presented here by way of example and not limitation. Such networking environments are commonplace in office-wide or enterprise-wide computer networks, intranets, and the Internet.

When used in a LAN or WLAN networking environment, a computer system implementing aspects of the system is connected to the local network through a network interface or adapter. When used in a WAN or WLAN networking environment, the computer may include a modem, a wireless link, or other mechanisms for establishing communications over the wide area network, such as the Internet. In a networked environment, program modules depicted relative to the computer, or portions thereof, may be stored in a remote data storage device. It will be appreciated that the network connections described or shown are exemplary and other mechanisms of establishing communications over wide area networks or the Internet may be used.

While various aspects have been described in the context of a preferred embodiment, additional aspects, features, and methodologies of the claimed systems will be readily discernible from the description herein, by those of ordinary skill in the art. Many embodiments and adaptations of the disclosure and claimed systems other than those herein described, as well as many variations, modifications, and equivalent arrangements and methodologies, will be apparent from or reasonably suggested by the disclosure and the foregoing description thereof, without departing from the substance or scope of the claims. Furthermore, any sequence(s) and/or temporal order of steps of various processes described and claimed herein are those considered to be the best mode contemplated for carrying out the claimed systems. It should also be understood that, although steps of various processes may be shown and described as being in a preferred sequence or temporal order, the steps of any such processes are not limited to being carried out in any particular sequence or order, absent a specific indication of such to achieve a particular intended result. In most cases, the steps of such processes may be carried out in a variety of different sequences and orders, while still falling within the scope of the claimed systems. In addition, some steps may be carried out simultaneously, contemporaneously, or in synchronization with other steps.

Aspects, features, and benefits of the claimed devices and methods for using the same will become apparent from the information disclosed in the exhibits and the other applications as incorporated by reference.

It will, nevertheless, be understood that no limitation of the scope of the disclosure is intended by the information disclosed in the exhibits or the applications incorporated by reference; any alterations and further modifications of the described or illustrated embodiments, and any further applications of the principles of the disclosure as illustrated therein are contemplated as would normally occur to one skilled in the art to which the disclosure relates.

The foregoing description of the exemplary embodiments has been presented only for the purposes of illustration and description and is not intended to be exhaustive or to limit the devices and methods for using the same to the precise forms disclosed. Many modifications and variations are possible in light of the above teaching.

The embodiments were chosen and described in order to explain the principles of the devices and methods for using the same and their practical application so as to enable others skilled in the art to utilize the devices and methods for using the same and various embodiments and with various modifications as are suited to the particular use contemplated. Accordingly, the scope of the present devices and methods for using the same is defined by the appended claims rather than the foregoing description and the exemplary embodiments described therein.

Embodiments may be provided in accordance with the following clauses:
1. One or more computing devices, comprising one or more processors, configured to:
   store, in a vault, an x509 Certificate Authority (CA) associated with at least one private key and a public certificate;
   receive a request comprising at least one client identification parameter and an expiration time;
   determine a Time-To-Live (TTL) value based on the expiration time;
   generate, based on the x509 CA and the TTL value, a short-term private key and a corresponding short-term x509 end-entity certificate comprising the TTL value and the at least one client identification parameter; and
   transmit the short-term private key and the short-term x509 end-entity certificate to the client,
   wherein the short-term x509 end-entity certificate is associated with authenticating the client to a secure endpoint for a duration associated with the TTL value.
2. The one or more computing devices of clause 1, wherein the x509 CA is self-signed within the vault.
3. The one or more computing devices of any preceding clause, wherein the x509 CA comprises an expiration indicator.
4. The one or more computing devices of any preceding clause, further comprising receiving the x509 CA from a third-party x509 Certificate Authority.
5. The one or more computing devices of any preceding clause, further configured to receive a selection associated with a cryptographic algorithm used to generate the short-term private key.
6. The one or more computing devices of any preceding clause, wherein the short-term x509 end-entity certificate comprises a subject line associated with the client identification parameter.
7. The one or more computing devices of any preceding clause, further configured to receive a selection associated with a hash algorithm.
8. The one or more computing devices of any preceding clause, further configured to automatically inject the short-term x509 end-entity certificate into a remote session for authentication.
9. The one or more computing devices of any preceding clause, further configured to transmit a warning associated with an expiration of the short-term x509 end-entity certificate to an authorized user.
10. The one or more computing devices of any preceding clause, wherein the vault is accessible to multiple users with predefined permissions.
11. The one or more computing devices of any preceding clause, further configured to create a Certificate Signing Request (CSR) based on the client identification parameter, wherein the short-term x509 end-entity certificate is generated upon receiving an approval of the CSR.
12. The one or more computing devices of any preceding clause 1, wherein the vault restricts check-out access to the x509 CA.
13. The one or more computing devices of any preceding clause, wherein transmitting the short-term x509 end-entity certificate comprises injecting the short-term x509 end-entity certificate into an application.
14. The one or more computing devices of any preceding clause, wherein the vault comprises an access log for the short-term x509 end-entity certificate.
15. The one or more computing devices of any preceding clause, further configured to modify, based on input from an authorized user, the TTL associated with the short-term x509 end-entity certificate at the time of issuance.
16. The one or more computing devices of any preceding clause, further configured to display a status of associated with the short-term x509 end-entity certificate, wherein the status indicates whether short-term x509 end-entity certificate is active, expired, or approaching expiration.
17. The one or more computing devices of any preceding clause, further configured to receive, via an interface, an x509 Subject.
18. The one or more computing devices of any preceding clause, wherein generation of the short-term x509 end-entity certificate is further based on a key size.
19. A method performed by one or more computing devices, the method comprising:
   storing, in a vault, an x509 Certificate Authority (CA) associated with at least one private key and a public certificate;
   receiving a request comprising at least one client identification parameter and an expiration time;
   determining a Time-To-Live (TTL) value based on the expiration time;
   generating, based on the x509 CA and the TTL value, a short-term private key and a corresponding short-term x509 end-entity certificate comprising the TTL value and the at least one client identification parameter; and
   transmitting the short-term private key and the short-term x509 end-entity certificate to the client, wherein the short-term x509 end-entity certificate is associated with authenticating the client to a secure endpoint for a duration associated with the TTL value.
20. A system comprising:
   one or more processors; and
   a memory coupled with the one or more processors, the memory storing executable instructions that when executed by the one or more processors cause the one or more processors to effectuate operations comprising:
      storing, in a vault, an x509 Certificate Authority (CA) associated with at least one private key and a public certificate;
      receiving a request comprising at least one client identification parameter and an expiration time; determining a Time-To-Live (TTL) value based on the expiration time;
      generating, based on the x509 CA and the TTL value, a short-term private key and a corresponding short-term x509 end-entity certificate comprising the TTL value and the at least one client identification parameter; and
      transmitting the short-term private key and the short-term x509 end-entity certificate to the client, wherein the short-term x509 end-entity certificate is associated with authenticating the client to a secure endpoint for a duration associated with the TTL value.

## Claims

**1.** One or more computing devices, comprising one or more processors, configured to:
store, in a vault, an x509 Certificate Authority (CA) associated with at least one private key and a public certificate;
receive a request comprising at least one client identification parameter and an expiration time;
determine a Time-To-Live (TTL) value based on the expiration time;
generate, based on the x509 CA and the TTL value, a short-term private key and a corresponding short-term x509 end-entity certificate comprising the TTL value and the at least one client identification parameter; and
transmit the short-term private key and the short-term x509 end-entity certificate to the client, wherein the short-term x509 end-entity certificate is associated with authenticating the client to a secure endpoint for a duration associated with the TTL value.

**2.** The one or more computing devices of claim 1, wherein the x509 CA is self-signed within the vault and/or the x509 CA comprises an expiration indicator.

**3.** The one or more computing devices of any preceding claim, further configured to receive a selection associated with a cryptographic algorithm used to generate the short-term private key.

**4.** The one or more computing devices of any preceding claim, further configured to automatically inject the short-term x509 end-entity certificate into a remote session for authentication.

**5.** The one or more computing devices of any preceding claim, further configured to transmit a warning associated with an expiration of the short-term x509 end-entity certificate to an authorized user.

**6.** The one or more computing devices of any preceding claim, wherein the vault is accessible to multiple users with predefined permissions.

**7.** The one or more computing devices of any preceding claim, further configured to create a Certificate Signing Request (CSR) based on the client identification parameter, wherein the short-term x509 end-entity certificate is generated upon receiving an approval of the CSR.

**8.** The one or more computing devices of any preceding claim, wherein transmitting the short-term x509 end-entity certificate comprises injecting the short-term x509 end-entity certificate into an application.

**9.** The one or more computing devices of any preceding claim, wherein the vault comprises an access log for the short-term x509 end-entity certificate.

**10.** The one or more computing devices of any preceding claim, further configured to modify, based on input from an authorized user, the TTL associated with the short-term x509 end-entity certificate at the time of issuance.

**11.** The one or more computing devices of any preceding claim, further configured to display a status of associated with the short-term x509 end-entity certificate, wherein the status indicates whether short-term x509 end-entity certificate is active, expired, or approaching expiration.

**12.** The one or more computing devices of any preceding claim, further configured to receive, via an interface, an x509 Subject.

**14.** The one or more computing devices of any preceding claim, wherein generation of the short-term x509 end-entity certificate is further based on a key size.

**15.** A method performed by one or more computing devices, the method comprising:
storing, in a vault, an x509 Certificate Authority (CA) associated with at least one private key and a public certificate;
receiving a request comprising at least one client identification parameter and an expiration time;
determining a Time-To-Live (TTL) value based on the expiration time;
generating, based on the x509 CA and the TTL value, a short-term private key and a corresponding short-term x509 end-entity certificate comprising the TTL value and the at least one client identification parameter; and
transmitting the short-term private key and the short-term x509 end-entity certificate to the client, wherein the short-term x509 end-entity certificate is associated with authenticating the client to a secure endpoint for a duration associated with the TTL value.
